(19) **Europäisches Patentamt**
**European Patent Office**
**Office européen des brevets**

(11)  **EP 2 387 706 B1**

(12) **FASCICULE DE BREVET EUROPEEN**

(45) Date de publication et mention
de la délivrance du brevet:
**01.05.2013  Bulletin 2013/18**

(21) Numéro de dépôt: **10706294.5**

(22) Date de dépôt: **12.01.2010**

(51) Int Cl.:
**G01M 13/02** *(2006.01)*     **F02C 9/28** *(2006.01)*
**G01H 1/00** *(2006.01)*     **G01M 15/14** *(2006.01)*
**G01M 15/12** *(2006.01)*

(86) Numéro de dépôt international:
**PCT/FR2010/050038**

(87) Numéro de publication internationale:
**WO 2010/081983 (22.07.2010 Gazette 2010/29)**

(54) **PROCEDE ET SYSTEME DE SURVEILLANCE DE PHENOMENES VIBRATOIRES SURVENANT DANS UN MOTEUR À TURBINE À GAZ D'AERONEF EN FONCTIONNEMENT**

VERFAHREN UND SYSTEM ZUR ÜBERWACHUNG VON VIBRATIONSPHÄNOMENEN IN EINEM IM BETRIEB BEFINDLICHEN GASTURBINENMOTOR EINES FLUGZEUGES

METHOD AND SYSTEM FOR MONITORING VIBRATORY PHENOMENA OCCURRING IN AN AIRCRAFT'S GAS TURBINE ENGINE IN OPERATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.01.2009  FR 0950156**

(43) Date de publication de la demande:
**23.11.2011  Bulletin 2011/47**

(73) Titulaire: **Snecma**
**75015 Paris (FR)**

(72) Inventeurs:
• **CARRATT, Bruno**
**F-94300 Vincennes (FR)**
• **FLORES, David**
**F-91540 Mennecy (FR)**
• **JADCZAK, Edouard**
**F-77350 Le Mee Sur Seine (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A- 1 970 691       US-A- 6 019 310**
**US-A- 6 116 089       US-A1- 2004 060 347**
**US-A1- 2007 250 245**

**Description**

Arrière-plan de l'invention

La présente invention se rapporte au domaine général de la surveillance de moteurs à turbine à gaz équipant les aéronefs, tels que par exemple les avions ou les hélicoptères. Elle concerne plus particulièrement un procédé et un système de surveillance de phénomènes vibratoires survenant dans un moteur à turbine à gaz d'aéronef au cours du fonctionnement de celui-ci.

Il est connu de placer des capteurs de vibration du type accéléromètre dans un moteur d'aéronef pour détecter les vibrations émises par un ou plusieurs composants particuliers du moteur lors du fonctionnement de ce dernier. Le signal vibratoire recueilli est analysé pour comparer son amplitude à des valeurs de seuil prédéfinies correspondant chacune à un fonctionnement avec défaut d'un composant particulier surveillé. Ainsi, en cas de défaut d'un composant surveillé du moteur, son fonctionnement entraîne l'apparition d'un phénomène vibratoire particulier qui peut être détecté par analyse du signal vibratoire.

Le document EP 1,970,691 décrit un tel procédé appliqué à la surveillance de l'usure des roulements d'un palier inter-arbres d'une turbomachine aéronautique. Dans cette invention, le signal vibratoire recueilli est transformé en un spectre fréquentiel pour obtenir des raies spectrales ordonnées selon des multiples de la fréquence théorique d'endommagement d'un roulement du palier (la fréquence théorique d'endommagement correspondant à un fonctionnement du roulement avec défaut). Les pics d'amplitude repérés autour des multiples de cette fréquence théorique sont alors comparés à des valeurs de seuil prédéfinies pour déterminer si les roulements du palier sont endommagés.

Bien qu'efficace, ce type de procédé de surveillance de l'art antérieur présente cependant certaines limites quant à son application. Il est en effet très compliqué voire impossible de calculer la fréquence théorique de fonctionnement avec défauts de tous les composants d'un moteur. Même si cela est possible pour certains composants, un tel calcul reste une simulation dont la fiabilité n'est pas toujours assurée. Il en résulte que nombre de phénomènes vibratoires survenant dans le moteur au cours d'un vol de l'aéronef et ayant pour origine un défaut d'un composant du moteur ne sont pas détectés ou mal interprétés avec les conséquences que cela comporte en termes de dommages potentiels pour le moteur.

Par ailleurs, les procédés de surveillance de l'art antérieur ne permettent pas de détecter un fonctionnement anormal d'un composant du moteur, comme par exemple le glissement d'un roulement de palier dans ses pistes de roulement. Or, de tels fonctionnements anormaux qui ne sont pas forcément liés à des défauts structurels des composants du moteur peuvent engendrer des détériorations de ces derniers.

Objet et résumé de l'invention

La présente invention a donc pour but principal de pallier de tels inconvénients en proposant un procédé et un système permettant d'améliorer la surveillance d'un moteur à turbine à gaz d'aéronef.

Conformément à l'invention, ce but est atteint grâce à un procédé de surveillance consistant à :

a) acquérir, lors d'une période prédéfinie de fonctionnement du moteur, un signal vibratoire représentatif de l'état de fonctionnement du moteur et de ses composants ;
b) établir sur la période prédéfinie un spectre de fréquences du signal vibratoire ;
c) utiliser une pluralité de signatures vibratoires correspondant chacune à un phénomène vibratoire survenant lors du fonctionnement des moteurs d'aéronefs du même type que celui à surveiller et ayant pour origine un défaut ou un fonctionnement anormal d'au moins l'un des composants des moteurs, chaque signature vibratoire étant définie par une fonction mathématique particulière dont les coefficients sont prédéterminés en fonction de paramètres de fonctionnement du moteur ;
d) identifier dans le spectre de fréquences les points de courbes qui répondent à des fonctions mathématiques définissant chacune une signature vibratoire afin de détecter la présence de défauts et de fonctionnements anormaux de composants du moteur ;
e) pour chaque courbe identifiée dans le spectre de fréquences et correspondant à une signature vibratoire ayant pour origine un défaut de composants du moteur, analyser l'amplitude associée aux points de la courbe par rapport à des valeurs d'amplitude prédéfinies correspondant chacune à un degré de sévérité du défaut ; et
f) suite au dépassement d'une ou plusieurs valeurs d'amplitude ou suite à la détection d'un fonctionnement anormal d'un composant du moteur, émettre un message associé à la signature vibratoire pour laquelle la ou les valeurs d'amplitude ont été dépassées ou pour laquelle le fonctionnement anormal a été détecté.

Le recours à des fonctions mathématiques particulières pour définir les signatures vibratoires permet de couvrir l'ensemble des phénomènes vibratoires survenant dans le moteur et ayant pour origine un défaut ou un fonctionnement anormal d'un composant du moteur, que ces phénomènes soient organisés ou non, prédictibles par la théorie ou non. De la sorte, l'ensemble des défauts et des fonctionnements anormaux des composants du moteur engendrant au cours d'un vol des phénomènes vibratoires particuliers peuvent être surveillés. Il en résulte une surveillance améliorée du moteur.

Selon une disposition avantageuse de l''invention, le procédé consiste en outre à générer un avis de maintenance du moteur lorsque l'émission d'un même message se répète sur plusieurs vols, sur plusieurs phases de vol identiques ou sur plusieurs fonctionnements du moteur au même régime. Cette disposition permet de suivre dans le temps l'évolution d'un phénomène vibratoire particulier et de prévenir tout dommage du moteur en pronostiquant au préalable un avis de maintenance. Les opérations de maintenance et la possibilité de réparer le composant incriminé à l'origine de la signature vibratoire particulière s'en trouvent grandement améliorées.

L'avis de maintenance comprend de préférence l'identification du ou des composants du moteur à l'origine du phénomène vibratoire anormal pour lequel le message est émis.

Selon une autre disposition avantageuse de l'invention, les fonctions mathématiques définissant les signatures vibratoires sont stockées dans une base de données pouvant être mise à jour. L'utilisation d'une telle base de données permet si besoin de mettre à jour les coefficients des fonctions mathématiques associées aux signatures vibratoires ou d'en ajouter de nouvelles. En particulier, cette opération de mise à jour peut être réalisée directement après le vol en se connectant à la base de données. Ainsi, le procédé présente une grande souplesse d'utilisation et d'adaptation.

L'analyse de l'amplitude associée aux points d'une même courbe identifiée dans le spectre de fréquences peut consister en une comparaison de l'amplitude associée à chaque point de la courbe par rapport à au moins une valeur de seuil prédéfinie, ou une comparaison de la valeur moyenne des amplitudes associées aux points de la courbe par rapport à une valeur de seuil moyenne prédéfinie, ou en un calcul de l'écart type entre les amplitudes associées aux points de la courbe et des valeurs de seuil prédéfinies.

Avantageusement, les coefficients des fonctions mathématiques particulières définissant les signatures vibratoires sont également prédéterminés en fonction de paramètres de vol de l'aéronef et/ou de la géométrie des composants du moteur.

La période prédéfinie de fonctionnement du moteur au cours de laquelle est acquis le signal vibratoire peut correspondre à une phase de vol particulière, un vol complet ou un fonctionnement du moteur à un régime particulier.

Les défauts et les fonctionnements anormaux de composants du moteur à l'origine des phénomènes vibratoires peuvent appartenir à la liste suivante : flottement de la soufflante du moteur, défaut d'un palier supportant en rotation au moins un arbre rotatif du moteur, apparition d'un balourd d'huile sur l'un des rotors du moteur, dégradation mécanique d'une dent d'engrenage, glissement d'un roulement de palier, crique ou usure d'un composant.

Corrélativement, l'invention a également pour objet un système de surveillance de phénomènes vibratoires survenant dans un moteur à turbine à gaz d'aéronef en fonctionnement, caractérisé en ce qu'il comprend :

a) des moyens d'acquisition, lors d'une période prédéfinie de fonctionnement du moteur, d'un signal vibratoire représentatif de l'état de fonctionnement du moteur et de ses composants ;
b) des moyens d'établissement sur la période prédéfinie d'un spectre de fréquences du signal vibratoire ;
c) une base de données comprenant une pluralité de signatures vibratoires correspondant chacune à un phénomène vibratoire survenant lors du fonctionnement des moteurs d'aéronef du même type que celui à surveiller et ayant pour origine un défaut ou un fonctionnement anormal d'au moins l'un des composants des moteurs, chaque signature vibratoire étant définie par une fonction mathématique particulière dont les coefficients sont prédéterminés en fonction de paramètres de fonctionnement du moteur ;
d) des moyens d'identification dans le spectre de fréquences des points de courbes qui répondent à des fonctions mathématiques définissant chacune une signature vibratoire afin de détecter la présence de défauts et de fonctionnements anormaux de composants du moteur ;
e) des moyens d'analyse de l'amplitude associée aux points des courbes ainsi identifiées par rapport à des valeurs d'amplitude prédéfinies correspondant chacune à un degré de sévérité d'un défaut du ou des composants du moteur associés à la signature vibratoire ; et
f) des moyens d'émission d'un message associé à la signature vibratoire pour laquelle la ou les valeurs d'amplitude ont été dépassées ou pour laquelle le fonctionnement anormal a été détecté suite au dépassement d'une ou plusieurs valeurs d'amplitude ou suite à la détection d'un fonctionnement anormal d'un composant du moteur.

<u>Brève description des dessins</u>

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est un organigramme montrant les différentes étapes du procédé de surveillance selon l'invention;
- la figure 2 représente un spectre de fréquences obtenu selon une étape du procédé de surveillance de l'invention ; et
- la figure 3 représente un autre spectre de fréquences obtenu selon une étape du procédé de surveillance de l'invention.

Description détaillée d'un mode de réalisation

Le procédé et le système de surveillance selon l'invention s'appliquent à tout type de moteur à turbine à gaz équipant les aéronefs, tels que par exemple les avions ou les hélicoptères. Dans le cas décrit ici, on s'intéressera plus particulièrement à un moteur à turbine à gaz d'avion qui comprend deux rotors. Bien entendu, l'invention ne se limite pas à un moteur à deux rotors mais s'applique à tous moteurs à turbine à gaz d'aéronef comportant un ou plusieurs rotors.

Le procédé et le système de surveillance selon l'invention permettent d'identifier de façon automatique des phénomènes vibratoires particuliers survenant dans le moteur en fonctionnement et ayant pour origine un défaut ou un fonctionnement anormal de l'un des composants du moteur (incluant ses équipements). Les défauts surveillés comprennent par exemple l'usure d'un roulement de palier, le flottement de la soufflante (dans le cas d'une turbomachine), etc. Quant à un fonctionnement anormal d'un composant du moteur, il peut s'agir par exemple d'un glissement d'un roulement de palier dans ses pistes de roulement.

Le procédé et le système de surveillance reposent sur une analyse des signaux vibratoires provenant de capteurs de vibrations (de type accéléromètres) qui sont typiquement installés sur un moteur. De façon connue en soi, de tels capteurs de vibration sont reliés pour le traitement du signal à un calculateur électronique (également appelé EMU pour « Engine Monitoring Unit ») pouvant être présent dans l'avion (par exemple dans la baie électronique) ou équipant directement le moteur.

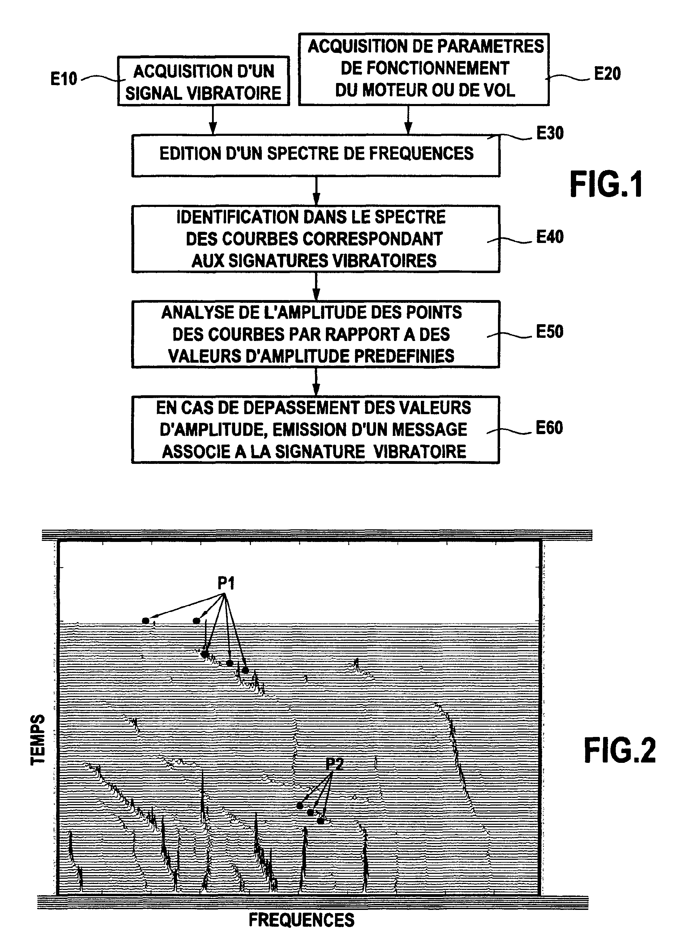

En liaison avec la figure 1, le procédé de surveillance selon l'invention consiste d'abord à acquérir, lors d'une période de mesure T prédéfinie de fonctionnement du moteur, un signal vibratoire $S_v$ représentatif de l'état de fonctionnement du moteur et de ses composants (c'est-à-dire du niveau de vibrations des composants dudit moteur - étape E10) et des paramètres de fonctionnement du moteur ou des paramètres de vol (étape E20).

Dans l'exemple décrit ici, les paramètres acquis au cours de l'étape E20 sont les régimes de rotation N1, N2 des deux rotors du moteur. Toutefois, il pourrait s'agir d'autres paramètres de fonctionnement du moteur (tels que la température de l'huile par exemple) ou bien de paramètres de vol (tels que par exemple la vitesse et l'altitude de vol, la température extérieure à l'aéronef, etc.).

La période de mesure T pendant laquelle sont acquis le signal vibratoire $S_v$ et les paramètres peut correspondre à une phase de vol particulière de l'avion (comme par exemple le décollage ou l'atterrissage), ou à un vol complet de l'avion ou encore à un fonctionnement du moteur à un régime particulier (par exemple au régime plein gaz ou au régime de croisière). La surveillance peut donc s'effectuer en continue dès que le moteur fonctionne.

Comme indiqué précédemment, le signal vibratoire $S_v$ provient d'un accéléromètre installé dans le moteur. Le signal est transmis au calculateur électronique et stocké dans une mémoire de celui-ci pour analyse soit au cours du vol de l'avion, soit après l'atterrissage de celui-ci.

Lorsque l'étape E20 consiste en l'acquisition des régimes de rotation N1, N2 des rotors du moteur, celle-ci s'effectue de façon synchrone au signal vibratoire $S_v$ et peut consister par exemple à convertir les signaux provenant de sondes tachymétriques montées sur les rotors du moteur (de telles sondes peuvent déjà être présentes sur le moteur). Ces signaux sont également transmis au calculateur électronique et stockés dans une mémoire de celui-ci.

L'étape suivante (E30) consiste à établir sur la période T un spectre de fréquences (ou spectrogramme) du signal vibratoire $S_v$. De façon connue, le spectre de fréquences est généralement établi en fonction des régimes de rotation N1, N2 des rotors du moteur ou en fonction du temps.

Par ailleurs, le spectre de fréquences est établi par application d'une transformée de Fourier et permet d'obtenir un diagramme à 3 dimensions (temps ou régime de rotation / fréquence / amplitude). La figure 2 illustre un exemple de spectre de fréquences obtenu pour un moteur à turbine à gaz d'avion ayant deux rotors avec en abscisse la fréquence et en ordonnée le temps.

L'étape E30 d'établissement du spectre de fréquences est bien connue en soi par l'homme de l'art et n'est donc pas détaillée ici. Elle est réalisée au moyen d'un logiciel de calcul équipant le calculateur électronique.

Le procédé de surveillance selon l'invention prévoit au cours d'une étape E40 d'identifier dans le spectre de fréquences les points appartenant à des courbes correspondant à des signatures vibratoires préalablement définies.

Ces signatures vibratoires correspondent chacune à un phénomène vibratoire particulier survenant lors du fonctionnement des moteurs du même type que celui à surveiller et ayant pour origine un défaut ou un fonctionnement anormal d'au moins l'un des composants du moteur.

Chaque signature vibratoire est par ailleurs définie par une fonction mathématique particulière F dont les coefficients sont préalablement déterminés notamment en fonction de paramètres de fonctionnement du moteur (régimes de rotation des rotors, température de l'huile, etc.) et éventuellement en fonction de paramètres de vol de l'aéronef (vitesse, altitude, température extérieure, etc.).

Les fonctions mathématiques F définissant les signatures vibratoires peuvent donc se présenter sous la forme de fonctions polynomiales, de fonctions exponentielles, de fonctions logarithmiques, etc. A titre d'exemple, une fonction mathématique particulière peut se présenter sous la forme d'une combinaison polynomiale prédéterminée des régimes de rotation des rotors du moteur.

La méthode d'obtention des signatures vibratoires, et en particulier des coefficients des fonctions mathématiques F correspondantes, sera détaillée ultérieurement.

L'étape E40 est réalisée au moyen d'un logiciel de calcul équipant le calculateur électronique. A l'aide de méthodes de calcul bien connues de l'homme de l'art, elle consiste à identifier dans le spectre de fréquences différents points (ayant pour coordonnées la fréquence, le temps et/ou les régimes de rotation des rotors selon le modèle de spectre de fréquences établi) appartenant à des courbes définies par les fonctions mathématiques particulières décrites ci-dessus et associées aux signatures vibratoires.

Dans l'exemple du spectre de fréquences illustré sur la figure 2, les points P1 appartiennent tous à une courbe dont la forme est définie par une fonction mathématique particulière prédéterminée. Quant aux points P2, ils appartiennent tous à une autre courbe dont la forme est définie par une autre fonction mathématique particulière prédéterminée.

Ainsi, cette étape E40 permet de détecter si au cours de la période de mesure T un ou plusieurs composants du moteur présentent un défaut ou fonctionnent de façon anormale (ou dégradée).

Bien entendu, la plage de fréquences du spectre dans laquelle l'identification des points appartenant à des courbes définies par les fonctions mathématiques particulières peut faire l'objet d'ajustements par un paramétrage. Un point dont les coordonnées s'écartent très faiblement en fréquence (c'est-à-dire d'une valeur prédéterminée) d'une courbe définie par une fonction mathématique particulière pourra ainsi être considérée comme appartenant à cette courbe.

Par ailleurs, il est possible d'associer à chaque courbe définie par une fonction mathématique particulière une plage de fréquences dans laquelle l'identification des points du spectre de fréquences appartenant à cette courbe doit s'effectuer.

Dans le cas de la détection dans le spectre de fréquences d'une courbe correspondant à une signature vibratoire ayant pour origine un défaut de composant du moteur, une étape suivante (E50) consiste à analyser l'amplitude associée aux points de ces courbes par rapport à des valeurs d'amplitude prédéfinies. Ces valeurs d'amplitude correspondent chacune à un degré de sévérité du défaut en question.

Cette étape d'analyse est également réalisée au moyen d'un logiciel de calcul équipant le calculateur électronique. Elle peut être mise en oeuvre par différentes méthodes de calcul bien connues de l'homme de l'art : il peut s'agir d'une comparaison de l'amplitude associée à chaque point de la courbe par rapport à au moins une valeur de seuil prédéfinie, ou d'une comparaison de la valeur moyenne des amplitudes associées aux points de la courbe par rapport à une valeur de seuil moyenne prédéfinie, ou encore d'un calcul de l'écart type entre les amplitudes associées aux points de la courbe et des valeurs de seuil prédéfinies.

Suite au dépassement d'une ou plusieurs valeurs d'amplitude, un message est émis (étape E60), ce message étant associé à la signature vibratoire pour laquelle la ou les valeurs d'amplitude ont été dépassées.

Cette étape E60 prévoit également d'émettre un message suite à la détection lors de l'étape E40 d'un fonctionnement anormal d'un composant du moteur, ce message étant aussi associé à la signature vibratoire pour laquelle le fonctionnement anormal a été détecté.

Lorsque le procédé de surveillance est mis en oeuvre au cours d'un vol, ce message peut être stocké dans une mémoire du calculateur électronique pour analyse ultérieure ou bien transmis directement au sol par des moyens de transmission connus en soi.

Par ailleurs, il est avantageux de stocker en mémoire les messages émis au cours d'un même vol pour éventuellement générer ultérieurement un avis de maintenance du moteur. Un tel avis de maintenance est notamment généré selon une règle de diagnostic propre au moteur lorsque l'émission d'un même message se répète sur plusieurs vols, sur plusieurs phases de vol identiques ou sur plusieurs fonctionnements du moteur au même régime.

Ainsi, il est possible de suivre dans le temps l'évolution d'un phénomène vibratoire particulier et de prévenir tout dommage du ou des composants du moteur à l'origine de ce phénomène vibratoire en pronostiquant au préalable un avis de maintenance. A cet effet, l'avis de maintenance comprend bien entendu l'identification du ou des composants du moteur à l'origine du phénomène vibratoire pour lequel le message est émis. Ce suivi de la santé mécanique du ou des composants du moteur permet de pronostiquer un temps de fonctionnement restant avant de programmer une action de maintenance.

Exemple appliqué à l'identification d'un défaut d'un roulement de palier de turbomachine

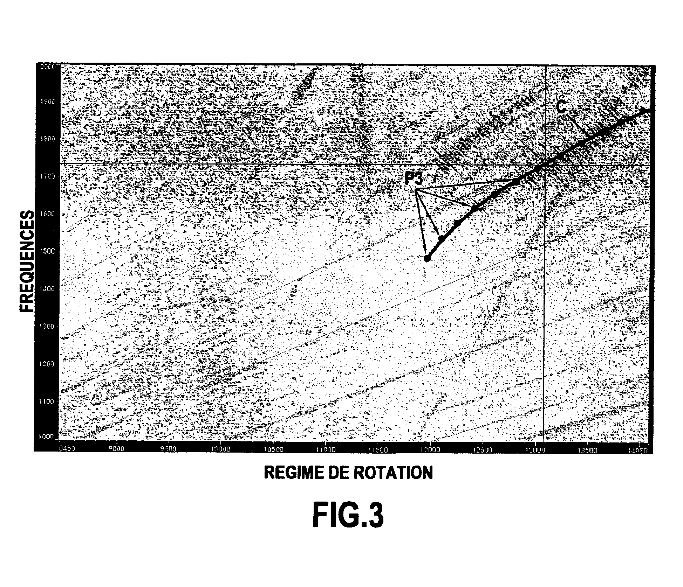

En liaison avec la figure 3, on décrira maintenant un exemple de mise en oeuvre du procédé selon l'invention appliqué à la surveillance d'un roulement de palier. Dans cet exemple, le moteur est une turbomachine aéronautique double corps double flux du type CFM56® et le palier surveillé est le palier amont du rotor haute-pression de la turbomachine.

Le spectre de fréquences illustré sur la figure 3 correspond au diagramme régime de rotation (en abscisse) / fréquences (en ordonnée) établi pour le signal vibratoire recueilli par un accéléromètre monté sur une partie fixe de la turbomachine. Les régimes de rotation N1, N2 sont ceux du corps basse-pression et du corps haute-pression de la turbomachine, respectivement.

Le spectre de fréquences a été établi sur une période correspondant à un fonctionnement allant du ralenti au plein gaz du moteur.

Deux signatures vibratoires sont utilisées ici. L'une de ces signatures vibratoires correspond à un défaut d'un roulement du palier et l'autre signature vibratoire correspond à un fonctionnement anormal de ce même roulement de palier.

La signature vibratoire correspondant à un fonctionnement anormal d'un roulement du palier est définie par la combinaison polynomiale F suivante :

$$F = -0,0001 N_2^2 + 3,3071 N_2 - 22507$$

et elle est schématisée sur la figure 3 par la courbe $\underline{C}$.

Quant à la signature vibratoire correspondant à un défaut du roulement du palier, elle est définie dans le cas d'un fonctionnement normal par la fonction linéaire F' suivante :

$$F' = 9,5 N_2$$

Bien entendu, un défaut peut se cumuler à un fonctionnement anormal, par exemple un écaillage de roulement peut se cumuler à du glissement. L'initiation d'un tel écaillage peut être le fonctionnement anormal.

A l'aide d'un calcul numérique prenant en compte l'ensemble des points du spectre de fréquences (d'abscisses les régimes de rotation et d'ordonnées les fréquences), les points P3 du spectre sont identifiés comme appartenant (à une approximation près) à la courbe $\underline{C}$ correspondant à la signature vibratoire définie par la combinaison polynomiale F.

En effet, le résultat de la fonction mathématique représentée par la courbe $\underline{C}$ permet d'interroger le spectre dans une plage de fréquences prédéfinie afin de récupérer l'amplitude du signal de vibration et les informations associées.

La récupération et le stockage de l'ensemble de ces résultats sur l'ensemble de la plage de régime moteur ou de temps et de la plage fréquentielle sont suivis d'une étape de comparaison des amplitudes avec des valeurs de seuil prédéfinies.

Méthode d'obtention des signatures vibratoires

On décrira maintenant comment les signatures vibratoires sont obtenues, et plus particulièrement comment sont établis les différents coefficients des fonctions mathématiques particulières correspondant à ces signatures.

Les signatures vibratoires sont établies pour une même famille de moteurs d'aéronefs, c'est-à-dire pour des moteurs ayant les mêmes caractéristiques principales. Pour l'exemple de spectre de fréquences illustré sur la figure 3, la famille des turbomachines est celle des CFM56®.

Les signatures vibratoires sont également déterminées en fonction de la géométrie des composants des moteurs appartenant à cette famille. Par exemple, dans le cas de la surveillance d'un défaut d'un roulement de palier de turbomachine, la signature vibratoire associée à ce défaut dépend notamment de la géométrie du roulement, du nombre d'éléments roulants et de la vitesse de rotation des arbres supportés par ce palier.

Par ailleurs, à l'aide de la géométrie des composants, plusieurs méthodes peuvent être utilisées pour déterminer les coefficients des fonctions mathématiques particulières correspondant à ces signatures vibratoires.

Lorsqu'elle est applicable, l'une de ces méthodes consiste à calculer les coefficients d'une fonction mathématique particulière par calcul théorique. Par exemple, dans le cas de la surveillance d'un défaut sur un roulement de palier inter-arbres à rouleau d'une turbomachine, il est connu que la combinaison polynomiale théorique correspondant à un fonctionnement avec défaut d'un roulement de ce palier peut s'écrire de la façon suivante :

$$F = [D/(2d)] \times (N_2 - N_1) \times [1 - (d/D)^2]$$

où $\underline{D}$ est le diamètre nominal du roulement, $\underline{d}$ est diamètre d'un rouleau et $N_1$ et $N_2$ sont les vitesses de rotation respectives des arbres supportés par le palier.

Une autre méthode pouvant être utilisée pour calculer les variables d'une fonction mathématique particulière est le recours à l'expérience par le retour d'événements en service ou par des essais de développement. Il s'agit ici d'utiliser les données vibratoires recueillies par les capteurs de vibrations du moteur lorsqu'un défaut d'un composant du moteur est identifié. En particulier, cette méthode nécessite généralement dans un premier temps de partir d'un calcul théorique correspondant à un fonctionnement avec défaut ou un fonctionnement anormal d'un composant du moteur et d'affiner ce calcul à l'aide de retours d'expériences et éventuellement de combiner cette fonction mathématique avec un autre phénomène tel qu'un glissement de roulement par exemple.

Dans le cas d'une application à une turbomachine aéronautique, ces fonctions mathématiques particulières peuvent par exemple correspondre aux défauts et aux fonctionnements anormaux de la turbomachine suivants : flottement de la soufflante de la turbomachine, défaut d'un palier supportant en rotation au moins un arbre rotatif de la turbomachine, apparition d'un balourd d'huile sur l'un des rotors de la turbomachine, dégradation mécanique d'une dent d'engrenage, glissement d'un roulement de palier, crique ou usure d'un composant, etc.

Une fois l'ensemble des fonctions mathématiques identifiées, elles sont associées au défaut ou au fonctionnement anormal du composant de l'aéronef à l'origine du phénomène vibratoire particulier. Elles sont ensuite stockées sous forme d'une table de configuration dans une base de données d'une mémoire du calculateur électronique.

L'avantage d'avoir recours à une base de données est que celle-ci peut être mise à jour. Par mise à jour de la base de données dans laquelle sont stockées les fonctions mathématiques, on entend que de nouvelles fonctions mathématiques associées à de nouvelles signatures vibratoires peuvent être ajoutées à la table de configuration, ou que celle-ci peut être modifiée par ajustement des coefficients des fonctions mathématiques déjà présentes ou par ajustement des fonctions mathématiques elles-mêmes.

De la sorte, d'autres défauts et d'autres fonctionnements anormaux de composants du moteur survenant pendant le fonctionnement de celui-ci et ayant pour conséquence la génération d'un phénomène vibratoire particulier peuvent être identifiés ultérieurement et leurs signatures vibratoires correspondantes être ajoutées à la base de données. Cette possibilité permet d'enrichir la base de données en y ajoutant de nouvelles signatures vibratoires au fur et à mesure que l'on identifie de nouveaux défauts et de nouveaux fonctionnements anormaux. La mise à jour de la base de données est par ailleurs simple puisqu'elle peut être réalisée directement sur l'aéronef en se connectant au calculateur électronique.

Ainsi, le procédé selon l'invention présente une grande souplesse d'utilisation et d'adaptation. Il permet notamment de répondre à une crise en service avec une intervention directement sur l'aéronef dans retour en usine du calculateur électronique pour reconfiguration par exemple.

## Revendications

1. Procédé de surveillance de phénomènes vibratoires survenant dans un moteur à turbine à gaz d'aéronef en fonctionnement, **caractérisé en ce qu'**il consiste à :

   a) acquérir (E10), lors d'une période prédéfinie de fonctionnement du moteur, un signal vibratoire représentatif de l'état de fonctionnement du moteur et de ses composants ;
   b) établir (E30) sur la période prédéfinie un spectre de fréquences du signal vibratoire ;
   c) utiliser une pluralité de signatures vibratoires correspondant chacune à un phénomène vibratoire survenant lors du fonctionnement des moteurs d'aéronefs du même type que celui à surveiller et ayant pour origine un défaut ou un fonctionnement anormal d'au moins l'un des composants des moteurs, chaque signature vibratoire étant définie par une fonction mathématique particulière dont les coefficients sont prédéterminés en fonction de paramètres de fonctionnement du moteur ;
   d) identifier (E40) dans le spectre de fréquences les points de courbes qui répondent à des fonctions mathématiques définissant chacune une signature vibratoire afin de détecter la présence de défauts et de fonctionnements anormaux de composants du moteur ;
   e) pour chaque courbe identifiée dans le spectre de fréquences et correspondant à une signature vibratoire ayant pour origine un défaut de composants du moteur, analyser (E50) l'amplitude associée aux points de la courbe par rapport à des valeurs d'amplitude prédéfinies correspondant chacune à un degré de sévérité du défaut ; et
   f) suite au dépassement d'une ou plusieurs valeurs d'amplitude ou suite à la détection d'un fonctionnement anormal d'un composant du moteur, émettre (E60) un message associé à la signature vibratoire pour laquelle la ou les valeurs d'amplitude ont été dépassées ou pour laquelle le fonctionnement anormal a été détecté.

**2.** Procédé selon la revendication 1, consistant en outre à générer un avis de maintenance du moteur lorsque l'émission d'un même message se répète sur plusieurs vols, sur plusieurs phases de vol identiques ou sur plusieurs fonctionnements du moteur au même régime.

**3.** Procédé selon la revendication 2, dans lequel l'avis de maintenance comprend l'identification du ou des composants du moteur à l'origine du phénomène vibratoire pour lequel le message est émis.

**4.** Procédé selon l'une quelconque des revendications 1 à 3, dans lequel les fonctions mathématiques définissant les signatures vibratoires sont stockées dans une base de données pouvant être mise à jour.

**5.** Procédé selon l'une quelconque des revendications 1 à 4, dans lequel l'analyse de l'amplitude associée aux points d'une même courbe identifiée dans le spectre de fréquences consiste en une comparaison de l'amplitude associée à chaque point de la courbe par rapport à au moins une valeur de seuil prédéfinie, ou une comparaison de la valeur moyenne des amplitudes associées aux points de la courbe par rapport à une valeur de seuil moyenne prédéfinie, ou en un calcul de l'écart type entre les amplitudes associées aux points de la courbe et des valeurs de seuil prédéfinies.

**6.** Procédé selon l'une quelconque des revendications 1 à 5, dans lequel les coefficients des fonctions mathématiques particulières définissant les signatures vibratoires sont également prédéterminés en fonction de paramètres de vol de l'aéronef et/ou de la géométrie des composants du moteur.

**7.** Procédé selon l'une quelconque des revendications 1 à 6, dans lequel la période prédéfinie de fonctionnement du moteur au cours de laquelle est acquis le signal vibratoire correspond à une phase de vol particulière, un vol complet ou un fonctionnement du moteur à un régime particulier.

**8.** Procédé selon l'une quelconque des revendications 1 à 7, dans lequel les défauts et les fonctionnements anormaux de composants du moteur à l'origine des phénomènes vibratoires appartiennent à la liste suivante : flottement de la soufflante du moteur, défaut d'un palier supportant en rotation au moins un arbre rotatif du moteur, apparition d'un balourd d'huile sur l'un des rotors du moteur, dégradation mécanique d'une dent d'engrenage, glissement d'un roulement de palier, crique ou usure d'un composant.

**9.** Système de surveillance de phénomènes vibratoires survenant dans un moteur à turbine à gaz d'aéronef en fonctionnement, **caractérisé en ce qu'**il comprend :

    a) des moyens d'acquisition, lors d'une période prédéfinie de fonctionnement du moteur, d'un signal vibratoire représentatif de l'état de fonctionnement du moteur et de ses composants ;
    b) des moyens d'établissement sur la période prédéfinie d'un spectre de fréquences du signal vibratoire ;
    c) une base de données comprenant une pluralité de signatures vibratoires correspondant chacune à un phénomène vibratoire survenant lors du fonctionnement des moteurs d'aéronef du même type que celui à surveiller et ayant pour origine un défaut ou un fonctionnement anormal d'au moins l'un des composants des moteurs, chaque signature vibratoire étant définie par une fonction mathématique particulière dont les coefficients sont prédéterminés en fonction de paramètres de fonctionnement du moteur ;
    d) des moyens d'identification dans le spectre de fréquences des points de courbes qui répondent à des fonctions mathématiques définissant chacune une signature vibratoire afin de détecter la présence de défauts et de fonctionnements anormaux de composants du moteur ;
    e) des moyens d'analyse de l'amplitude associée aux points des courbes ainsi identifiées par rapport à des valeurs d'amplitude prédéfinies correspondant chacune à un degré de sévérité d'un défaut du ou des composants du moteur associés à la signature vibratoire ; et
    f) des moyens d'émission d'un message associé à la signature vibratoire pour laquelle la ou les valeurs d'amplitude ont été dépassées ou pour laquelle le fonctionnement anormal a été détecté suite au dépassement d'une ou plusieurs valeurs d'amplitude ou suite à la détection d'un fonctionnement anormal d'un composant du moteur.

**10.** Système selon la revendication 9, dans lequel la base de données dans laquelle sont stockées les fonctions mathématiques définissant les signatures vibratoires est enregistrée dans une mémoire d'un calculateur électronique du moteur ou de l'aéronef et peut être mise à jour.

**Claims**

1. A method of monitoring vibratory phenomena that occur in an aircraft gas turbine engine in operation, the method being **characterized in that** it consists in:

   a) during a predefined period of operation of the engine, acquiring (E10) a vibratory signal representative of the operating state of the engine and of its components;
   b) over the predefined period, establishing (E30) a frequency spectrum of the vibratory signal;
   c) using a plurality of vibratory signatures, each corresponding to a vibratory phenomenon occurring during the operation of aeroengines of the same type as that being monitored and originating from a defect in or abnormal operation of at least one of the components of the engines, each vibratory signature being defined by a particular mathematical function having coefficients that are predetermined as a function of operating parameters of the engine;
   d) in the frequency spectrum, identifying (E40) points of curves that fit mathematical functions, each defining a vibratory signature, in order to detect the presence of defects in and abnormal operation of components of the engine;
   e) for each curve identified in the frequency spectrum and corresponding to a vibratory signature originating from a defect in components of the engine, analyzing (E50) the amplitude associated with the points of the curve relative to predefined amplitude values, each corresponding to a degree of severity of the defect; and
   f) as a result of one or more amplitude values being exceeded or of abnormal operation of a component of the engine being detected, issuing (E60) a message associated with the vibratory signature for which the amplitude value(s) has/have been exceeded or for which the abnormal operation has been detected.

2. A method according to claim 1, further consisting in generating a maintenance notice for the engine when the same message has been emitted repeatedly over a plurality of flights, over a plurality of identical flight stages, or over a plurality of periods of the engine operating at the same speed.

3. A method according to claim 2, wherein the maintenance notice includes the identity of the engine component(s) at the origin of the vibratory phenomenon for which the message was issued.

4. A method according to any one of claims 1 to 3, wherein the mathematical functions defining the vibratory signatures are stored in a database that is capable of being updated.

5. A method according to any one of claims 1 to 4, wherein the analysis of the amplitude associated with the points in a given curve identified in the frequency spectrum consists in comparing the amplitude associated with each point of the curve with at least one predefined threshold value, or in comparing the mean value of the amplitudes associated with points of the curve with a predefined mean threshold value, or by calculating a standard deviation between the amplitudes associated with the points of the curve and predefined threshold values.

6. A method according to any one of claims 1 to 5, wherein the coefficients of the particular mathematical functions defining the vibratory signatures are also predetermined as a function of flight parameters of the aircraft and/or the shapes of the engine components.

7. A method according to any one of claims 1 to 6, wherein the predefined period of engine operation during which the vibratory signal is acquired corresponds to a particular stage of flight, a complete flight, or the engine operating at a particular speed.

8. A method according to any one of claims 1 to 7, wherein the defects in and the abnormal operation of engine components giving rise to vibratory phenomena belong to the following list: flutter of the engine fan; a defect of a bearing supporting at least one rotary shaft of the engine in rotation; the appearance of an oil unbalance on one of the rotors of the engine; mechanical damage to a geartooth; slip of a rolling element of a bearing; a crack or wear of a component.

9. A system for monitoring vibratory phenomena occurring in an aircraft gas turbine engine in operation, the system being **characterized in that** it comprises:

   a) means for operating during a predefined operating period of the engine to acquire a vibratory signal representative of the operating state of the engine and of its components;

b) means for acting over the predefined period to establish a frequency spectrum of the vibratory signal;

c) a database comprising a plurality of vibratory signatures, each corresponding to a vibratory phenomenon occurring during operation of aircraft engines of the same type as the engine being monitored and originating from a defect in or abnormal operation of at least one of the components of the engines, each vibratory signature being defined by a particular mathematical function having coefficients that are predetermined as a function of operating parameters of the engine;

d) means for identifying, in the frequency spectrum, points of curves that match mathematical functions, each defining a vibratory signature, in order to detect the presence of defects in and abnormal operation of components of the engine;

e) means for analyzing the amplitude associated with the points of the curves as identified in this way relative to predefined amplitude values, each corresponding to a degree of severity of a defect in the or each component of the engine associated with the vibratory signature; and

f) means for issuing a message associated with the vibratory signature for which the amplitude value(s) have/had been exceeded or for which abnormal operation has been detected as a result of one or more amplitude values being exceeded or as a result of abnormal operation of an engine component being detected.

10. A system according to claim 9, wherein the database in which the mathematical functions defining the vibratory signatures are stored is recorded in a memory of an electronic monitoring unit of the engine or of the aircraft and is capable of being updated.

**Patentansprüche**

1. Verfahren zur Überwachung von Vibrationsphänomen, die in einem Gasturbinentriebwerk eines Flugzeugs im Betrieb auftreten, **dadurch gekennzeichnet, daß** es darin besteht:

a) während eines vordefinierten Betriebszeitraums des Triebwerks ein für den Betriebszustand des Triebwerks und seiner Komponenten repräsentatives Vibrationssignal zu erfassen (E10),

b) über den vordefinierten Zeitraum ein Frequenzspektrum des Vibrationssignals zu erstellen (E30),

c) eine Vielzahl von Vibrationssignaturen zu verwenden, die jeweils einem Vibrationsphänomen entsprechen, das während des Betriebs der Flugzeugtriebwerke des gleichen Typs wie des zu überwachenden auftritt und dessen Ursache ein Fehler oder ein anormaler Betrieb von wenigstens einer der Komponenten der Triebwerke ist, wobei jede Vibrationssignatur durch eine besondere mathematische Funktion definiert ist, deren Koeffizienten in Abhängigkeit von Betriebsparametern des Triebwerks vorbestimmt werden,

d) in dem Frequenzspektrum die Punkte von Kurven zu identifizieren (E40), die mathematischen Funktionen, welche jeweils eine Vibrationssignatur definieren, entsprechen, um das Vorliegen von Fehlern und anormalen Funktionsweisen von Komponenten des Triebwerks zu erfassen,

e) für jede Kurve, die in dem Frequenzspektrum identifiziert wird und die einer Vibrationssignatur entspricht, deren Ursache ein Fehler von Komponenten des Triebwerks ist, die den Punkten der Kurve zugeordnete Amplitude im Vergleich zu vordefinierten, jeweils einem Schweregrad des Fehlers entsprechenden Amplitudenwerten zu analysieren (E50), und

f) infolge des Überschreitens eines oder mehrerer Amplitudenwerte(s) oder infolge der Erfassung eines anormalen Betriebs einer Komponente des Triebwerks eine Nachricht zu senden (E60), die der Vibrationssignatur zugeordnet ist, bei welcher der oder die Amplitudenwert(e) überschritten worden sind oder bei welcher der anormale Betrieb erfaßt worden ist.

2. Verfahren nach Anspruch 1, das ferner darin besteht, eine Anzeige zur Wartung des Triebwerks zu generieren, wenn das Senden einer gleichen Nachricht sich über mehrere Flüge, über mehrere gleiche Flugphasen oder über mehrere Betriebe des Triebwerks mit gleicher Drehzahl wiederholt.

3. Verfahren nach Anspruch 2, wobei die Wartungsanzeige die Identifizierung der Komponente oder Komponenten des Triebwerks, die die Ursache für das Vibrationsphänomen ist/sind, für das die Nachricht gesendet wird, umfaßt.

4. Verfahren nach einem der Ansprüche 1 bis 3, wobei die mathematischen Funktionen, welche die Vibrationssignaturen definieren, in einer aktualisierbaren Datenbank gespeichert sind.

5. Verfahren nach einem der Ansprüche 1 bis 4, wobei die Analyse der Amplitude, die den Punkten einer in dem Frequenzspektrum identifizierten gleichen Kurve zugeordnet ist, in einem Vergleich der jedem Punkt der Kurve zugeordneten Amplitude mit wenigstens einem vordefinierten Schwellenwert oder einem Vergleich des Durchschnittswertes der den Punkten der Kurve zugeordneten Amplituden mit einem vordefinierten Durchschnittsschwellenwert oder in einer Berechnung der Standardabweichung zwischen den den Punkten der Kurve zugeordneten Amplituden und vordefinierten Schwellenwerten besteht.

6. Verfahren nach einem der Ansprüche 1 bis 5, wobei die Koeffizienten der besonderen mathematischen Funktionen, welche die Vibrationssignaturen definieren, auch in Abhängigkeit von Flugparametern des Flugzeugs und/oder der Geometrie der Komponenten des Triebwerks vorbestimmt werden.

7. Verfahren nach einem der Ansprüche 1 bis 6, wobei der vordefinierte Betriebszeitraum des Triebwerks, im Laufe dessen das Vibrationssignal erfaßt wird, einer einzelnen Flugphase, einem vollständigen Flug oder einem Betrieb des Triebwerks mit einer besonderen Drehzahl entspricht.

8. Verfahren nach einem der Ansprüche 1 bis 7, wobei die Fehler und die anormalen Funktionsweisen von Komponenten des Triebwerks, die die Ursache für die Vibrationsphänomene sind, zu der folgenden Liste gehören: Flattern des Gebläses des Triebwerks, Versagen eines Lagers, das wenigstens eine umlaufende Welle des Triebwerks drehend lagert, Auftreten einer Ölunwucht an einem der Rotoren des Triebwerks, mechanische Beschädigung eines Getriebezahns, Schlupf eines Wälzlagers, Riß oder Verschleiß einer Komponente.

9. System zur Überwachung von Vibrationsphänomen, die in einem Gasturbinentriebwerk eines Flugzeugs im Betrieb auftreten, **dadurch gekennzeichnet, daß** es umfaßt:

    a) Mittel zum Erfassen, während eines vordefinierten Betriebszeitraums des Triebwerks, eines für den Betriebszustand des Triebwerks und seiner Komponenten repräsentativen Vibrationssignals,
    b) Mittel zum Erstellen, über den vordefinierten Zeitraum, eines Frequenzspektrums des Vibrationssignals,
    c) eine Datenbank, die eine Vielzahl von Vibrationssignaturen umfaßt, die jeweils einem Vibrationsphänomen entsprechen, das während des Betriebs der Flugzeugtriebwerke des gleichen Typs wie des zu überwachenden auftritt und dessen Ursache ein Fehler oder ein anormaler Betrieb von wenigstens einer der Komponenten der Triebwerke ist, wobei jede Vibrationssignatur durch eine besondere mathematische Funktion definiert ist, deren Koeffizienten in Abhängigkeit von Betriebsparametern des Triebwerks vorbestimmt werden,
    d) Mittel zum Identifizieren, in dem Frequenzspektrum, der Punkte von Kurven, die mathematischen Funktionen, welche jeweils eine Vibrationssignatur definieren, entsprechen, um das Vorliegen von Fehlern und anormalen Funktionsweisen von Komponenten des Triebwerks zu erfassen,
    e) Mittel zur Analyse der den Punkten der so identifizierten Kurven zugeordneten Amplitude im Vergleich zu vordefinierten Amplitudenwerten, die jeweils einem Schweregrad eines Fehlers der Komponente oder Komponenten des Triebwerks, welche der Vibrationssignatur zugeordnet sind, entsprechen, und
    f) Mittel zum Senden einer Nachricht, die der Vibrationssignatur zugeordnet ist, bei welcher der oder die Amplitudenwert(e) überschritten worden sind oder bei welcher der anormale Betrieb erfaßt worden ist, infolge des Überschreitens eines oder mehrerer Amplitudenwerte(s) oder infolge der Erfassung eines anormalen Betriebs einer Komponente des Triebwerks.

10. System nach Anspruch 9, wobei die Datenbank, in der die mathematischen Funktionen, welche die Vibrationssignaturen definieren, gespeichert sind, in einem Speicher eines elektronischen Rechners des Triebwerks oder des Flugzeugs gespeichert ist und aktualisiert werden kann.

E10 — ACQUISITION D'UN SIGNAL VIBRATOIRE

ACQUISITION DE PARAMETRES DE FONCTIONNEMENT DU MOTEUR OU DE VOL — E20

E30 — EDITION D'UN SPECTRE DE FREQUENCES

IDENTIFICATION DANS LE SPECTRE DES COURBES CORRESPONDANT AUX SIGNATURES VIBRATOIRES — E40

ANALYSE DE L'AMPLITUDE DES POINTS DES COURBES PAR RAPPORT A DES VALEURS D'AMPLITUDE PREDEFINIES — E50

EN CAS DE DEPASSEMENT DES VALEURS D'AMPLITUDE, EMISSION D'UN MESSAGE ASSOCIE A LA SIGNATURE VIBRATOIRE — E60

**FIG.1**

**FIG.2**

TEMPS

P1

P2

FREQUENCES

**REGIME DE ROTATION**

# FIG.3

**EP 2 387 706 B1**

## RÉFÉRENCES CITÉES DANS LA DESCRIPTION

**Documents brevets cités dans la description**

- EP 1970691 A